(19) Europäisches Patentamt
European Patent Office
Office européen des brevets

(11) Publication number: 0 001 306
B1

(12) **EUROPEAN PATENT SPECIFICATION**

(45) Date of publication of patent specification: 21.07.82

(51) Int. Cl.³: C 09 J 3/14, C 09 J 7/02, C 09 J 7/04, C 08 L 53/02

(21) Application number: 78200184.6

(22) Date of filing: 11.09.78

(54) **A hot melt adhesive composition.**

(30) Priority: 23.09.77 US 836102

(43) Date of publication of application: 04.04.79 Bulletin 79/7

(45) Publication of the grant of the patent: 21.07.82 Bulletin 82/29

(84) Designated Contracting States: BE CH DE FR GB NL SE

(56) References cited:
US - A - 4 104 323
CHEMICAL ABSTRACTS, vol. 80, 1974, 122160z * the whole abstract *
CHEMICAL ABSTRACTS, vol. 81, 1974, 122066u * the whole abstract *

(73) Proprietor: SHELL INTERNATIONALE RESEARCH MAATSCHAPPIJ B.V.
Carel van Bylandtlaan 30
NL-2596 HR Den Haag (NL)

(72) Inventor: Hansen, David Romme
15918 Red Willow Drive
Houston Texas 77084 (US)

(74) Representative: Puister, Antonius Tonnis, Mr. et al
P.O. Box 302
NL-2501 CH The Hague (NL)

EP 0 001 306 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A hot melt adhesive composition

The invention relates to a hot melt adhesive composition comprising a selectively hydrogenated thermoplastic elastomeric block copolymer having at least two terminal non-elastomeric polymer blocks A of a monoalkenyl- or monoalkenylidene-substituted aromatic hydrocarbon and at least one intermediate elastomeric polymer block B of an aliphatic conjugated diene hydrocarbon, and a tackifying resin.

Hot melt adhesive compositions containing a thermoplastic elastomeric block copolymer, a tackifying resin and a paraffinic extending oil are known from U.S. patent specification No. 3,239,478. In this known composition the thermoplastic elastomeric block copolymer has at least two terminal non-elastomeric polymer blocks A of a monoalkenyl- or monoalkenylidene-substituted aromatic hydrocarbon and at least one intermediate elastomeric polymer block B of an aliphatic conjugated diene hydrocarbon and it may be selectively hydrogenated. The known adhesive compositions show a relatively low service temperature. The highest temperature at which the thermoplastic elastomeric block copolymers retain useful properties and, without being vulcanized, act like vulcanisates is limited by the softening temperature (Tg) of the terminal non-elastomeric polymer blocks A. Depending upon the molecular weight of the end polymer blocks and the load, the block copolymers can begin to significantly creep or flow at 50—105°C. For a number of applications it would be very advantageous to have higher service temperature. For example, the adhesives would be useful in paint shops if masking tapes provided with the adhesives had a service temperature of 110—120°.

Now, in accordance with the invention hot melt adhesive compositions are provided comprising 100 parts by weight of a selectivity hydrogenated thermoplastic elastomeric block copolymer having at least two terminal non-elastomeric polymer blocks A of a monoalkenyl- or monoalkenylidene-substituted aromatic hydrocarbon and at least one intermediate elastomeric polymer block B of an aliphatic conjugated diene hydrocarbon, 50—200 parts by weight of a tackifying resin and 0—200 parts by weight of a mineral hydrocarbon oil, characterized in that at least 80% of the aliphatic double bonds and no more than about 25% of the alkenyl arene aromatic double bonds of the block copolymer have been hydrogenated, that the tackifying resin is compatible with the polymer block B of the thermoplastic elastomeric block copolymer and that the hot melt adhesive composition comprises 1—100 parts by weight of a low molecular weight polyphenylene ether resin having a viscosity average molecular weight ($M_{vis}$ of between 6,000 and 25,000 and a softening point (Tg) of between 170°C and 210°C.

Adhesive compositions according to the invention possess service temperatures significantly higher than the known adhesive compositions not containing a polyphenylene ether resin or adhesive compositions which contain high molecular weight polyphenylene ether resin. Contrary to the expected result, it has been found that the particular low molecular weight polyphenylene ether resin is much preferred over the commercially available high molecular weight resin. Since the higher molecular weight polyphenylene ether resin has a higher softening temperature than the corresponding low molecular weight resin, one would expect that adhesive compositions containing the higher molecular weight resin would have higher service temperatures than adhesive compositions containing the lower molecular weight resin. However, it has surprisingly been found that the opposite is true: the adhesives containing the lower molecular weight resin have the higher service temperature.

The block copolymers present in the composition according to the invention are thermoplastic elastomers. They have at least two terminal non-elastomeric polymer blocks A of a monoalkenyl- or monoalkylidene-substituted aromatic hydrocarbon and at least one intermediate elastomeric polymer block B of an aliphatic conjugated hydrocarbon.They are selectively hydrogenated. Their macromolecular configuration may be linear, radial or branched. Block copolymers of the most simple configuration would have the structure polystyrene-polyisoprene-polystyrene and polystyrene-polybutadiene-polystyrene. A radial block copolymer would comprise one in which a polymer block of a conjugated diene has three or more branches, the tip of each branch being connected to a polymer block of a monoalkenyl- or monoalkenylidene-substituted aromatic hydrocarbon. Expressed in another way, the block copolymer present in the composition according to the invention may have the configuration $A—B—(B—A)_n$ wherein n varies from 1 to 20, preferably from 1 to 3.

Methods for the preparation of such polymers are known in the art. Particular reference will be made to the use of lithium-based catalysts and especially lithium-alkyls for the preparation of the precursor polymers (polymers before hydrogenation). The structure of the polymers is determined by their methods of polymerization. For example, linear polymers result by sequential introduction of the desired monomers into the reaction vessel when using such initiators as lithiumalkyls or dilithiostilbene, or by coupling a two segment block copolymer with a difunctional coupling agent. Branched structures, on the other hand, may be obtained by the use of suitable coupling agents having a functionality with respect to the precursor polymers of three or more. Coupling may be affected with multifunctional coupling agents such as dihalo-alkanes or -alkenes and divinyl benzene as well as certain polar compounds such as silicon halides, siloxanes, or esters of monohydric alcohols with carboxylic acids. The presence of any coupling residues in the polymer may be ignored for an adequate description of the

polymers forming a part of the compositions of this invention. Likewise, in the generic sense, the specific structures also may be ignored. The invention applies especially to the use of selectively hydrogenated polymers having the configuration before hydrogenation of the following typical species:

polystyrene-polybutadiene-polystyrene (SBS)
polystyrene-polyisoprene-polystyrene (SIS)
poly(alpha-methylstyrene)-polybutadiene-poly)alpha-methylstyrene) ($\alpha$MS—B—$\alpha$MS)
poly(alpha-methylstyrene-polyisoprene-poly(alpha-methylstyrene) ($\alpha$MS—I—$\alpha$MS)

It will be understood that both polymer blocks A and B may be either homopolymer or random copolymer blocks as long as each block predominates in at least one class of the monomers characterizing the blocks as defined hereinbefore. Thus, polymer blocks A may comprise styrene/alpha-methylstyrene copolymer blocks or styrene/butadiene random copolymer blocks as long as the blocks individually predominate in monoalkenyl arenes. The term "monoalkenyl arene" will be taken to include styrene and its analogues and homologues including alpha-methylstyrene and ring-substituted styrenes, particularly ring-methylated styrenes. The preferred mono-alkenyl arenes are styrene and alpha-methylstyrene, and styrene is particularly preferred. The polymer blocks B may comprise homopolymers of butadiene or isoprene, copolymers of butadiene with isoprene and copolymers of one of these two dienes with a monoalkenyl arene as long as the polymer blocks B predominate in conjugated diene units. When the monomer employed is butadiene, it is preferred that between 35 and 55 mol. percent of the condensed butadiene units in the butadiene polymer block have 1,2 configuration. Thus, when such a block is hydrogenated, he resulting product is, or resembles, a regular copolymer block of ethylene and butene-1 (EB). If the conjugated diene employed is isoprene, the resulting hydrogenated product is or resembles a regular copolymer block of alternating ethylene and propylene (EP).

Hydrogenation of the precursor block copolymers is preferably effected by use of catalyst comprising the reaction products of an aluminium alkyl compound with nickel or cobalt carboxylates or alkoxides. Preferred block copolymers are those where at least 99% of aliphatic double bonds are hydrogenated and less than 5% of the aromatic double bonds are hydrogenated.

The number average molecular weights of the individual polymer blocks may vary within wide limits. In most instances, the terminal non-elastomeric polymer blocks A may have number average molecular weights in the range of from 2,000 to 50,000, preferably in the range of from 9,000 to 35,000, while the intermediate elastomeric polymer blocks B may have number average molecular weights in the range of from 20,000 to 300,000, preferably in the range of from 25,000 to 150,000. These molecular weights are most accurately determined by tritium counting methods or osmotic pressure measurements. The proportion of the terminal non-elastomeric polymer blocks A may be between 8 and 55% by weight of the block copolymer, preferably between 10 and 30% by weight.

The block copolymer by itself is not tacky or sticky. Therefore, it is necessary to add a tackifying resin that is compatible with the hydrogenated elastomeric polymer block B. A much preferred tackifying resin is a copolymer of piperylene and 2-methyl-2-butene having a softening point of 95°C. This resin is available commercially under the trade name "WINGTACK" 95, and is prepared by the cationic polymerization of 60% piperylene, 10% isoprene, 5% cyclopentadiene, 15% 2-methyl butene and about 10% dimer. Other tackifying resins of the same general type may be employed in which the resinous copolymer comprises 20—80 weight percent of piperylene and 80—20 weight percent of 2-methyl-2-butene. The resins normally have softening points (ring and ball) between 80°C and 115°C. Other tackifying resins which are also useful in the compositions of this invention include hydrogenated resins, esters of resin, polyterpenes, terpenephenol resins, and polymerized mixed olefines.

The amount of tackifying resin employed varies from 50 to 200 parts by weight per hundred parts by weight rubber (phr), preferably, between 50 and 150 phr.

The hydrocarbon rubber extending oil, usually referred to as paraffinic/naphthenic oils, are usually fractions of refined petroleum oils having less than 30% by weight of aromatics (by clay-gel analysis) and usually have a viscosity of between 20 cSt and 110 cSt at 38°C. Commercial extending oils include "SHELLFLEX" oils, Nos, 310, 371 and 311. The amount of extending oil employed varies from 0 to 200 phr, preferably from 25 to 150 phr.

An essential component of the present invention is the polyphenylene ether resin. These resins significantly improve the service temperature of the adhesive composition.

The polyphenylene ether resins are those having repeating structural units of the formula:

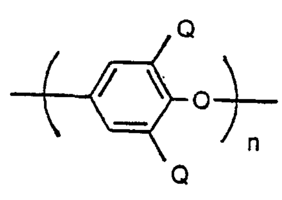

wherein the oxygen ether atom of one unit is connected to the benzene nucleus of the next adjoining unit, n is a positive integer, and each Q is a monovalent substituent selected from the group consisting of hydrogen, halogen, hydrocarbon radicals, halohydrocarbon radicals having at least two carbon atoms between the halogen atom and the phenyl nucleus, hydrocarbonoxy radicals, and halohydrocarbonoxy radicals having at least two carbon atoms between the halogen atom and phenyl nucleus. Especially preferred polyphenylene ether resins for purposes of the invention are those having alkyl substitutions in the two positions ortho to the oxygen ether atom — i.e., where each Q is alkyl, most preferably, having from 1 to 4 carbon atoms. The most preferred polyphenylene ether resin for purposes of the invention is poly(2,6-dimethyl-1,4-phenylene)ether (each Q is methyl). The viscosity average molecular weight ($M_{vis}$) of the polyphenylene ether resin is between 6,000 and 25,000, preferably 12,000.The softening point ($T_g$) of the ether resin is between 170°C and 210°C, preferably less than 200°C. The viscosity average molecular weight ($M_{vis}$) of the polyphenylene ether is determined by intrinsic viscosity measurements in chloroform at 25°C and is calculated using the equation $[\eta] = KM_{vis}^{a}$ where "$\eta$" is the limiting viscosity number and "K" and "a" are Mark Houwink constants equal to $4.83 \times 10^{-4}$ and 0.64 respectively. The viscosity average molecular weight of the polyphenylene ether resin is critical.

The amount of polyphenylene ether resin employed is between 1 and 100 phr (parts by weight per hundred parts by weight rubber, or block copolymer as in this case), preferably between 5 and 50 phr.

Optionally, an additional resin being compatible with the terminal non-elastomeric polymer block A and having a high softening point may be employed.

By a terminal-block-compatible resin is meant a resin which is compatible with a homopolymer derived from the same monomer and having the same structure and molecular weight as the terminal polymer block of the block copolymer used, when resin and homopolymer are mixed in the same ratio as the ratio of resin to terminal polymer block in the adhesive composition. The resin is compatible with the homopolymer, if substantially clear films can be made from a mixture of the resin and the homopolymer. Incompatibility of the resin with the homopolymer manifests itself by the occurrence of obvious opacity due to the presence of a separate disperse phase.

In addition to compatibility, the high softening point, resin should have a softening point above 100°C, as determined by ASTM method E28, using a ring and ball apparatus.

Useful resins include coumarone-indene resins, vinyl toluene-alpha-methylstyrene copolymers, and polyindene resins. A preferred resin is a coumarone-indene resin. The amount of high softening point resin varies from 10 to 200 phr.

The adhesive compositions according to the invention are typically prepared by mixing the components at an elevated temperature, preferably between 230°C and 260°C.

The adhesive compositions according to the invention may be modified with supplementary materials including pigments, and fillers, as well as stabilizers and oxidation inhibitors.

The hot melt adhesives of the instant invention are preferably used in the preparation of pressure-sensitive adhesive tapes. These tapes are preferably used where high service temperatures are required.

The invention is further illustrated by means of the following examples, which are given for the purpose of illustration alone and are not meant to limit the invention to the particular reactants and amounts disclosed.

In the examples the following materials were employed:

1) Block copolymer I; a selectively hydrogenated styrene-butadiene-styrene (SEBS) block copolymer having block molecular weights of 10,000—55,000—10,000.
2) Block copolymer II; a selectively hydrogenated styrene-butadiene-styrene (SEBS) block copolymer having block molecular weights of 8,000—40,000—8,000.
3) "CUMAR" LX—509[a]; a coumarone-indene resin having a Ring & Ball softening temperature of 155°C and a glass transition temperature ($T_g$) of about 88°C, determined by thermal expansion.
4) "PPO"—L; pure poly (2,6-dimethylphenylene oxide) (PPO) having a viscosity average molecular weight ($M_{vis}$) of 10,400 and a $T_g$ of 195°C.
5) "PPO"—H; pure poly(2,6-dimethylphenylene oxide) (PPO) having a weight average molecular weight ($M_w$) of 50,000 and $T_g$ of 210°C.
6) "WINGTACK"[a] 95, a diene-olefin tackifier resin.
7) "TUFFLO"[a] 6056, a hydrocarbon rubber extending oil.
8) "KAYDOL"[a], a paraffinic/naphthenic oil.
9) "ARKON" P—85[a], a hydrogenated alpha-methyl styrene resin.
10) "IRGANOX"' 1010[a], pentaerytrityl tetra 3-(3,5-ditert.butyl-4-hydroxyphenyl)propionate, an antioxidant.
11) "MYLAR"[a], polyethylene terephtalate.

The (a) marked materials are commercially available and indicated by their trade names.

The adhesive compositions were evaluated by a modified heat distortion temperature test (HDT), and a shear adhesion failure temperature test (SAFT).

The heat distortion temperature of the polymer blends was measured with die D tensile bars (ASTM D—412) cut from plaques 0.175 cm thick, compression moulded at 6895 kPa. A moulding temperature of 160°C was used. The samples were subjected to a 758 kPa tensile load (engineering stress) in a temperature chamber in which the temperature increased at the rate of 22.2°C per hour. The heat distortion temperature was taken to be the temperature at which the sample elongated 1.25 cm (ca. 30% elongation assuming all of the elongation takes place in the narrowest section of the tensile bar). Zero elongations were measured at room temperature with the load on the sample.

The service temperature of the mechanically mixed adhesives was measured by using a shear adhesion failure test (SAFT). This test consisted of finding the temperature at which a 2.5 x 2.5 cm lap shear joint failed with a 1 kilogram load. The lap shear joints were prepared by compression moulding at 160°C the adhesive formulation between two sheets of 0.025 mm "MYLAR" with a 0.038 mm aluminium foil shim. The shim regulated the adhesive thickness (usually 0.05—0.075 mm) and also masked the appropriate area for the 2.5 x 2.5 cm lap joint. The excess "MYLAR" was trimmed away and the aluminium foil removed to leave the appropriate size specimen. The lap shear joint with a 1 kg load was placed in an oven in which the temperature was increased at the rate of 22.2°C/hr. The SAFT temperature was taken to be the temperature at which the joint failed.

ILLUSTRATIVE EXAMPLE I

Illustrative Example I reveals the improved high service temperatures of adhesive compositions containing the low molecular weight polyphenylene ether resin. The adhesives were prepared by first mixing all components (except the mid-block tackifying resin) in a Banbury mixer, at 200°C followed by extrusion at 250°C. The chopped pellets were then mixed with the mid-block resin in a Sigma Blade Brabender mixer at 180°C. The results shown in Table I indicate the improvement in SAFT when "PPO"—L is employed in the compositions. All of the adhesive blends were transparent except 7 and 12 (blends with "PPO"—H). It should be noted that "PPO"—H does not improve the service temperature of the adhesive.

TABLE I

| Run No. | 1 | 2 | 3 | 4 | 5 | 6 | 7 | 8 | 9 | 10 | 11 | 12 |
|---|---|---|---|---|---|---|---|---|---|---|---|---|
| Block copolymer I | 100 | 100 | 100 | 100 | 100 | 100 | 100 | 100 | 100 | 100 | 100 | 100 |
| "TUFFLO" 6056 | | | | 50 | 50 | 50 | 50 | 50 | 50 | 50 | 50 | 50 |
| "KAYDOL" | 100 | 100 | 100 | | | | | | | | | |
| "WINGTACK" 95 | | | | | | | | | 150 | 150 | 150 | 150 |
| "ARKON" P—85 | 200 | 200 | 200 | 150 | 150 | 150 | | 150 | | | | |
| "PPO"—H | | | | | | | 20 | | | | | 20 |
| "PPO"—L | | 20 | | | 10 | 20 | | | | 20 | | |
| "CUMAR" LX—509 | | | 20 | | | | | 20 | | | 20 | |
| "IRGANOX" 1010 | 2 | 2 | 2 | 1 | 1 | 1 | 1 | 1 | 1 | 1 | 1 | 1 |
| SAFT (°C) | 90.8 | 103 | 91.3 | 111.1 | 123.8 | 136.4 | 112.8 | 110 | 116.6 | 132 | 122.1 | 112.8 |

ILLUSTRATIVE EXAMPLE II

Illustrative Example II reveals the significant improvement in heat distortion temperature for blends containing "PPO"—L. The various blends were prepared by mixing the components on a Brabender mixer at a temperature of 250°C for 8 min. at 50 rpm. The results are presented below in Table II. All blends were transparent.

TABLE II

| Run No. | 13 | 14 | 15 | 16 | 17 | 18 | 19 | 20 |
|---|---|---|---|---|---|---|---|---|
| Block copolymer I | 100 | 100 | 100 | 100 | 100 | 100 | 100 | 100 |
| "KAYDOL" | 100 | 100 | 100 | | | | 100 | 100 |
| "TUFFLO" 6065 | | | | 100 | 100 | 100 | | |
| "PPO"—L | | 20 | 50 | | 20 | 50 | | |
| "CUMAR" LX—509 | | | | | | | 20 | 50 |
| "IRGANOX" 1010 | 1 | 1 | 1 | 1 | 1 | 1 | 1 | 1 |
| HDT (°C) | 59 | 79.8 | 102.8 | 60 | 81.4 | 101.7 | 69.3 | 83.7 |
| ΔHDT (°C) | | 20.2 | 43.7 | | 21.3 | 42.0 | 9.5 | 24.1 |

ILLUSTRATIVE EXAMPLE III

In illustrative Example III, various blends of the present block copolymer and "PPO"—L were prepared by melt blending at 250°C on a Brabender mixer for 8 minutes at 50 rpm. All samples contained 0.5 phr dilaurylthiodipropionate and 0.5 phr "IRGANOX" 1010. As is evident from the results shown in Table III, the heat distortion temperature was raised significantly (up to 38°C). All of the blends were transparent.

TABLE III

| Run No. | 21 | 22 | 23 | 24 | 25 |
|---|---|---|---|---|---|
| Block copolymer II | 100 | 100 | 100 | 100 | 100 |
| "PPO"—L | — | 5 | 12 | 35 | 17.5 |
| "CUMAR" LX—509 | — | — | — | — | 17.5 |
| HDT, °C | 73.8 | 87 | 104 | 129.8 | 121 |
| ΔHDT, °C | — | 13.4 | 30.8 | 56 | 47.6 |

**Claims**

1. A hot melt adhesive composition comprising 100 parts by weight of a selectively hydrogenated thermoplastic elastomeric block copolymer having at least two terminal non-elastomeric polymer blocks A; of a monoalkenyl- or monoalkenylidene-substituted aromatic hydrocarbon and at least one intermediate elastomeric polymer block B of an aliphatic conjugated diene hydrocarbon, 50—200 parts by weight of a tackifying resin and 0—200 parts by weight of a mineral hydrocarbon oil, characterized in that at least 80% of the aliphatic double bonds and no more than about 25% of the alkenyl arene

aromatic double bonds of the block copolymer have been hydrogenated, that the tackifying resin is compatible with the polymer block B of the thermoplastic elastomeric block copolymer and that the hot melt adhesive composition comprises 1—100 parts by weight of a low molecular weight polyphenylene ether resin having a viscosity average molecular weight ($M_{vis}$) of between 6,000 and 25,000 and a softening point (Tg) of between 170°C and 210°C.

2. A hot melt adhesive composition as claimed in claim 1, characterized in that the tackifying resin is one selected from the group consisting of a copolymer of piperylene and 2-methyl-2-butene having a softening point (ring and ball) between 80°C and 115°C, hydrogenated resin, esters of resin, polyterpenes, terpenephenol resins and polymerized mixed olefins.

3. A hot melt adhesive composition as claimed in claim 1 or 2, characterized in that the tackifying resin is present in an amount in the range of from 50 to 150 parts by weight per 100 parts by weight of block copolymer.

4. A hot melt adhesive composition as claimed in any one of the preceding claims, characterized in that the mineral hydrocarbon oil is a fraction of a refined petroleum oil having less than 30% by weight or aromatics (by clay-gel analysis) and a viscosity of between 20 cSt.and 110 cSt at 38°C.

5. A hot melt adhesive composition as claimed in any one of the preceding claims, characterized in that the mineral hydrocarbon oil is present in an amount in the range of from 25 to 150 parts by weight per 100 parts by weight of block copolymer.

6. A hot melt adhesive composition as claimed in any one of the preceding claims, characterized in that the polyphenylene ether resin is a resin having repeating structural units of the formula

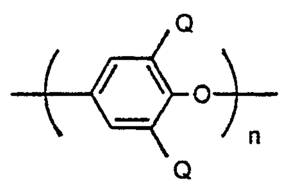

wherein the oxygen ether atom of one unit is connected to the benzene nucleus of the next ajoining unit, n is a positive integer, and each Q is a monovalent substituent selected from the group consisting of hydrogen, halogen, hydrocarbon radicals, halohydrocarbon radicals having at least two carbon atoms between the halogen atom and the phenyl nucleus, hydrocarbonoxy radicals, and halohydrocarbonoxy radicals having at least two carbon atoms between the halogen atom and phenyl nucleus.

7. A hot melt adhesive composition as claimed in claim 6, characterized in that Q is an alkyl radical having 1 to 4 carbon atoms.

8. A hot melt adhesive composition as claimed in claim 6, characterized in that the polyphenylene ether resin is present in an amount in the range of from 5 to 50 parts by weight per 100 parts by weight of block copolymer.

9. A hot melt adhesive composition as claimed in any one of the preceding claims, characterized in that the composition contains an additional resin being compatible with the terminal non-elastomeric polymer block A and having a high softening point above 100°C as determined by ASTM method E 28, using a ring and ball apparatus.

10. A hot melt adhesive composition as claimed in claim 9, characterized in that the additional resin being compatible with the terminal non-elastomeric polymer block A and having a high softening point above 100°C is one selected from the group consisting of coumarone-indene resins, vinyl toluene-alpha-methylstyrene copolymers and polyindene resins.

11. A hot melt adhesive composition as claimed in claim 9 or 10, characterized in that the additional resin is present in an amount in the range of from 10 to 200 parts by weight per 100 parts by weight of block copolymer.

**Revendications**

1. Composition adhésive fusible comprenant 100 parties en poids d'un copolymère séquencé élastomère thermoplastique sélectivement hydrogéné ayant au moins deux blocs terminaux A de polymère non élastomère d'un hydrocarbure monoalcényl- ou monoalcénylidène-aromatique et au moins un bloc intermédiaire B de polymère élastomère d'un hydrocarbure diène aliphatique conjugué, 50 à 200 parties en poids d'une résine donnant des propriétés adhésives et 0 à 200 parties en poids d'une huile minérale d'hydrocarbures, caractérisée en ce qu'au moins 80% des doubles liaisons aliphatiques et pas plus d'environ 25% des doubles liaisons aromatiques d'alcényl-arène du copolymère séquencé ont été hydrogénées, que la résine donnant des propriétés adhésives est compatible avec le bloc de polymère B du copolymère séquencé élastomère thermoplastique et que la composition adhésive fusible comprend 1 à 100 parties en poids d'une résine oxyde de polyphénylène de poids moléculaire peu élevé ayant un poids moléculaire moyen en viscosité ($M_{vis}$) compris entre 6000 et 25000 et un point de ramollissement (Tg) compris entre 170°C et 210°C.

2. Composition adhésive fusible selon la revendication 1, caractérisée en ce que la résine donnant des propriétés adhésives est choisie parmi un copolymère de pipérylène et de 2-méthyl-2-butène ayant un point de ramollissement (bille et anneau) compris entre 80°C et 115°C, une résine hydrogénée, des esters de résine, des polyterpènes, des résines terpènephénol et des oléfines mélangées polymérisées.

3. Composition adhésive fusible selon l'une des revendications 1 et 2, caractérisée en ce que la résine donnant des propriétés adhésives est présente à raison de 50 à 150 parties en poids pour 100 parties en poids de copolymère séquencé.

4. Composition adhésive fusible selon l'une quelconque des revendications précédentes, caractérisée en ce que l'huile minérale d'hydrocarbures est une fraction d'une huile de pétrole raffinée ayant moins de 30% en poids de constituants aromatiques (par analyse sur gel d'argile) et une viscosité comprise entre 20 cSt et 110 cSt à 38°C.

5. Composition adhésive fusible selon l'une quelconque des revendications précédentes, caractérisée en ce que l'huile minérale d'hydrocarbures est présente à raison de 25 à 150 parties en poids pour 100 parties en poids de copolymère séquencé.

6. Composition adhésive fusible selon l'une quelconque des revendications précédentes, caractérisée en ce que la résine oxyde de polyphénylène est une résine ayant des mailles de la formule:

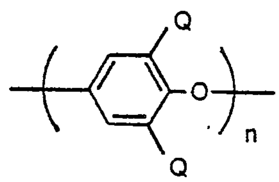

dans laquelle l'atome d'oxygène d'éther d'une maille est relié au noyau benzénique de la maille suivante, n est un nombre entier positif et chaque Q est un substituant monovalent choisi parmi l'hydrogène, les halogènes, des radicaux d'hydrocarbures, des radicaux d'hydrocarbures halogénes ayant au moins deux atomes de carbone entre l'atome d'halogène et le noyau phényle, des radicaux hydrocarbyloxy et des radicaux halogénohydrocarbyloxy ayant au moins deux atomes de carbone entre l'atome d'halogène et le noyau phényle.

7. Composition adhésive fusible selon la revendication 6, caractérisée en ce que Q est un radical alcoyle ayant de 1 à 4 atomes de carbone.

8. Composition adhésive fusible selon la revendication 6, caractérisée en ce que la résine oxyde de polyphénylène est présente à raison de 5 à 50 parties en poids pour 100 parties en poids de copolymère séquencé.

9. Composition adhésive fusible selon l'une quelconque des revendications précédentes, caractérisée en ce que la composition contient une résine supplémentaire compatible avec le bloc terminal A de polymère non élastomère et ayant un point de ramollissement élevé au-dessus de 100°C comme déterminé selon la méthode de la norme ASTM E 28, en utilisant un appareil à bille et anneau.

10. Composition adhésive fusible selon la revendication 9, caractérisée en ce que la résine supplémentaire compatible avec le bloc terminal A de polymère non élastomère et ayant un point de ramollissement élevé au-dessus de 100°C est choisie parmi les résines coumarone-indène, les copolymères vinyl-toluène-alpha-méthylstyrène et les résines polyindène.

11. Composition adhésive fusible selon l'une des revendications 9 et 10, caractérisée en ce que la résine supplémentaire est présente à raison de 10 à 200 parties en poids pour 100 parties en poids de copolymère séquencé.

**Patentansprüche**

1. Heiss schmelzendes Klebemittel umfassend 100 Gew.-Teile eines selektive hydrierten thermoplastischen elastomeren Block-copolymeren mit mindestens 2 endständigen, nicht elastomeren Polymerblöcken A aus einem monoalkenyl- oder monoalkenyliden-substituierten, aromatischen Kohlenwasserstoff und mindestens eniem dazwischen liegenden elastomeren Polymerblock B aus einem aliphatischen, konjugierten Dienkohlenwasserstoff, 50 bis 200 Gew.-Teile eines klebrigmachenden Harzes und 0 bis 200 Gew.-Teile eines Mineral-Kohlenwasserstofföls, dadurch gekennzeichnet, dass mindestens 80% der aliphatischen Doppelbindungen und nicht mehr als ungefähr 25% der alkenyl-aren-aromatischen Doppelbindungen des Blockcopolymeren hydriert sind, dass das klebrigmachende Harz mit dem Polymerblock B des thermoplastischen elastomeren Blockcopolymeren verträglich ist und dass das heiss schmelzende Klebemittel 1 bis 100 Gew.-Teile eines niedermolekularen Polyphenylenätherharzes mit einem mittleren, durch die Viskosität bestimmten Molekulargewicht ($M_{vis}$) zwischen 6 000 und 25 000 und einem Erweichungspunkt (Tg) zwischen 170°C und 210°C enthält.

2. Heiss schmelzendes Klebemittel nach Anspruch 1, dadurch gekennzeichnet, dass das klebrigmachende Harz ausgewählt ist aus der Gruppe bestehend aus einem Copolymer von Piperylen und 2-Methyl-2-buten mit einem Eiweichungspunkt (Ring und Kugel) zwischen 80°C und 115°C, hydrierten

Harzen, Harz-Estern, Polyterpenen, Terpenphenolharzen und polymerisierten gemischten Olefinen.

3. Heiss schmelzendes Klebemittel nach Anspruch 1 oder 2, dadurch gekennzeichnet, dass das klebrig-machende Harz in einer Menge im Bereich von 50 bis 150 Gew.-Teilen auf 100 Gew.-Teile des Blockcopolymeren vorhanden ist.

4. Heiss schmelzendes Klebemittel nach einem der vorhergehenden Ansprüche, dadurch gekennzeichnet, dass das Mineral-Kohlenwasserstofföl eine Fraktion eines raffinierten Erdöls mit veniger als 30 Gew.% Aromaten (Ton-Get-Analyse) und einer Viskosität zwischen 20 cSt und 110 cSt bei 38°C ist.

5. Heiss schmelzendes Klebemittel nach einem der vorhergehenden Ansprüche, dadurch gekennzeichnet, dass das Mineral-Kohlenwasserstofföl in einer Menge im Bereich von 25 bis 150 Gew.-Teilen auf 100 Gew.-Teile Blockcopolymer vorhanden ist.

6. Heiss schmelzendes Klebemittel nach einem der vorhergehenden Ansprüche, dadurch gekennzeichnet, dass das Polyphenylenätherharz ein Harz ist mit wiederkehrenden Struktureinheiten der Formel:

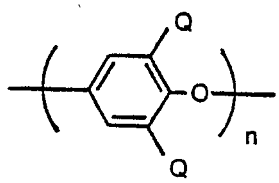

in der das Sauerstoffätheratom einer Einheit an den Benzolkern der nächsten angrenzenden Einheit gebunden ist, n eine positive ganze Zahl bedeutet und jedes Q ein einwertiger Substituent aus der Gruppe Wasserstoff, Halogen, Kohlenwasserstoffreste, Halogenkohlenwasserstoffreste mit mindestens 2 Kohlenstoffatomen zwischen dem Halogenatom und dem Phenylkern, Kohlenwasserstoffoxyreste und Halogenkohlenwasserstoffoxyreste mit mindestens 2 Kohlenstoffatomen zwischen dem Halogenatom und dem Phenylkern ist.

7. Heiss schmelzendes Klebemittel nach Anspruch 6, dadurch gekennzeichnet, dass Q ein Alkylrest mit 1 bis 4 Kohlenstoffatomen ist.

8. Heiss schmelzendes Klebemittel nach Anspruch 6, dadurch gekennzeichnet, dass das Polyphenylenätherharz in einer Menge im Bereich von 5 bis 50 Gew.-Teilen auf 100 Gew.-Teile Blockcopolymer vorhanden ist.

9. Heiss schmelzendes Klebemittel nach einem der vorhergehenden Ansprüche, dadurch gekennzeichnet, dass Mittel ein weiteres Harz enthält, das mit dem endständigen nicht elastomeren Polymerblock A verträglich ist und einen hohen Erweichungspunkt über 100°C besitzt, bestimmt nach dem ASTM—Verfahren E 28 mit Hilfe einer Ring- und Kugelvorrichtung.

10. Heiss schmelzendes Klebemittel nach Anspruch 9, dadurch gekennzeichnet, dass das zusätzlich vorhandene, mit dem endständigen nicht elastomeren Polymerblock A verträgliche Harz mit einem hohen Erweichungspunkt über 100°C ausgewählt ist aus der Gruppe Kumaron-Inden-Harze, Vinyl-Toluol-Alpha-Methylstyrol-Copolymere und Polyindenharze.

11. Heiss schmelzendes Klebemittel nach Anspruch 9 oder 10, dadurch gekennzeichnet, dass das zusätzliche Harz in einer Menge im Bereich von 10 bis 200 Gew.-Teilen auf 100 Gew.-Teile Blockcopolymer vorhanden ist.